# EUROPEAN PATENT SPECIFICATION

(11) **EP 4 185 777 B1**
(45) Date of publication and mention of the grant of the patent: **18.06.2025**
(21) Application number: 21746040.1
(22) Date of filing: 19.07.2021
(51) Int. Cl.: F04D 17/16, F04D 27/00, F04D 29/42, F04D 29/70, F24F 1/0022, F24F 12/00

(54) **CENTRIFUGAL FAN ARRANGEMENT**
RADIALLÜFTERANORDNUNG
ENSEMBLE VENTILATEUR CENTRIFUGE

(30) Priority: 24.07.2020 CH 9222020
(43) Date of publication of application: 31.05.2023
(73) Proprietor: Zehnder Group International AG, 5722 Gränichen (CH)
(72) Inventor: HADDEMAN, Martijn, 8161PN Epe (NL); ARENDS, Eric, 8011 Zwolle (NL); BRINK, Rene, 8084 't Harde (NL)
(74) Representative: Rentsch Partner AG
(86) International application number: PCT/EP2021/070134
(87) International publication number: WO 2022/018020

(56) References cited:
- GB-A- 1 419 591
- JP-A- S61 229 999
- US-A1- 2011 250 051
- US-A1- 2015 300 359
- US-A1- 2015 335 921
- US-A1- 2017 224 940
- US-A1- 2018 003 382
- US-A1- 2018 274 547
- US-A1- 2020 208 649
- US-B1- 6 241 463

## Description

The invention relates to a centrifugal fan arrangement and in particular to a centrifugal fan arrangement to be integrated in a heat recovery ventilation unit.

US 6 241 463 B1 discloses a centrifugal fan with an inlet nozzle having pressure measuring points in at least two planes perpendicular to the flow direction, whereby the pressure measuring points of one plane are interconnected, and the pressure measuring points of two planes are connected to a pressure sensor.

Other fan arrangements known in the prior art are for example disclosed on GB 1 419 591 A, US 2020/208649 A1, US 2017/224940 A1, US 2011/250051 A1 and US 2015/300359 A1.

It is an object of the invention to provide a compact centrifugal fan arrangement that lends itself to being integrated in a compact heat recovery ventilation unit.

The invention provides a centrifugal fan arrangement according to claim 1 while the dependent claims relate to preferred embodiments. The centrifugal fan arrangement comprises a centrifugal fan rotatably mounted within a scroll housing, wherein said centrifugal fan comprises a plurality of circumferentially spaced fan blades fixed to a central fan axle extending along an axial direction (axis of rotation of the fan) and/or to a circumferential fan ring extending in a plane orthogonal to an axial direction (axis of rotation of the fan), wherein said scroll housing comprises a housing main portion with a maximum housing diameter D and a maximum axial housing width H, a housing inlet portion and a housing outlet portion, said housing main portion surrounding said centrifugal fan at radially outer locations to define a circumferentially extending air guiding space, said housing inlet portion being located at radially inner locations to define an inner air inlet space, and said housing outlet portion being located at a radially outer location in order to define an air outlet space, characterized in that a ratio D/H between said maximum housing diameter D of said housing main portion and said maximum axial housing width Hof said housing main portion is comprised between 20/10 and 35/10, and preferably between 25/10 and 32/10. More preferably, said ratio is comprised between 15/ 10 and 35/10, and most preferably between 25/10 and 32/10.

As a result, the centrifugal fan arrangement according to the invention can be integrated in the housing of a heat recovery ventilation (HRV) unit with a flat housing where the housing has a given length and width and a thickness much smaller than the length or width. Due to its small D/H ratio, the centrifugal fan arrangement can be fitted in such a flat HRV unit housing with its axial direction or the axis of rotation of the fan in a plane defined by the length and width directions of the housing, i.e. orthogonal to the direction defined by the thickness direction of the housing. Typically, such flat HRV units having such flat housings, enabled by the centrifugal fan arrangement of the invention, are installed at a ceiling or at a wall with the axis of rotation of the centrifugal fan arrangement being parallel to the ceiling surface or to the wall surface.

In some embodiments, the fan blades of the centrifugal fan arrangement may have a maximum axial blade width E and a maximum radial blade length F.

In some embodiments, the fan blades may be straight radial blades.

In some embodiments, the fan blades may be curved blades, either forward-curved blades or, preferably, backward-curved blades.

Preferably, a ratio E/H between said axial blade width E and said maximum axial housing width H is comprised between 2/10 and 8/10, and preferably between 3/10 and 6/10.

Preferably, a ratio g/E between a radial gap g between an inner surface of said housing main portion and a radial end of said blades on the one hand, and said maximum radial blade width E is comprised between 1/10 and 12/10, and preferably between 2/10 and 8/10.

Preferably, a ratio g/F between a radial gap g between an inner surface of said housing main portion and a radial end of said blades on the one hand, and said maximum radial blade length F is comprised between 1/20 and 10/20, and preferably between 1/20 and 5/20.

Preferably, said fan blades are rectangular blades having an axial blade width E and a radial blade length F.

Preferably, said centrifugal fan comprises six to twelve circumferentially spaced fan blades. Preferably, said housing outlet portion comprises an outlet duct portion having a bend.

Preferably, said bend has a bend angle comprised between 0° and 60°, more preferably between 10° and 50°, even more preferably between 10° and 50°, and most preferably between 20° and 40°.

In a preferred embodiment, said bend has a bend angle of 30°. The centrifugal fan arrangement may comprise drainage holes.

Preferably, drainage holes are located in a wall portion of said scroll housing.

Preferably, two drainage holes are located on a maximum diameter circumferential line of said scroll housing at diametrically opposite locations.

As a result, the centrifugal fan arrangement can be arranged in a first way with one of the two drainage holes at a lowermost position of the centrifugal fan arrangement and with said bend facing in a first direction, or it can be arranged in a second way with the other one of the two drainage holes at the lowermost position of the centrifugal fan arrangement and with said bend facing in a second direction which may be opposite to said first direction.

Preferably, a local inner cross sectional area of said scroll housing increases from an inlet of said scroll housing to an outlet of said scroll housing.

Preferably, a local inner axial width of said scroll housing increases from an inlet of said scroll housing to an outlet of said scroll housing. More preferably, only the local inner axial width of said scroll housing increases from the inlet of said scroll housing to the outlet of said scroll housing while a local inner radial width of said scroll housing is substantially constant from the inlet to the outlet of said scroll housing.

As a result, the increase of the inner cross sectional area of said scroll housing can be achieved with a lesser increase of the radial width of aid scroll housing or even with no increase of the radial width of said scroll housing. Again, this contributes to a smaller maximum housing diameter D of said housing main portion and a smaller D/H ratio of the centrifugal fan arrangement according to the invention.

Nevertheless, a local inner radial width of said scroll housing may increase from an inlet of said scroll housing to an outlet of said scroll housing.

Preferably, two drainage holes are located at a location of maximum diameter of said scroll housing, one of said holes being located in a first wall portion and the other of said holes being located in a second wall portion diametrically opposite to said first wall portion.

The centrifugal fan arrangement comprises pressure sensor means for measuring air pressure within and/or outside said centrifugal fan arrangement.

The pressure sensor means comprises a ring duct with circumferentially spaced holes e.g. a flow ring, in fluid connection with a pressure sensor and circumferentially extending along an inner wall of said duct portion for spatially averaged air pressure measurement. Preferably, these holes are slits in the inner wall of said duct portion. The slits may be straight slits extending along the circumferential direction or extending in the axial direction. Alternatively, the slits may extend in a direction having a circumferential component and an axial component. Instead of circumferentially spaced holes, said pressure sensor means may comprise a ring duct with a continuous slit extending around the entire circumference of the inner wall of said duct portion.

As a result, the local air pressure at each of these circumferentially spaced holes contributes to the averaged air pressure contacting the pressure sensor.

Preferably, an axial flow grid having walls extending in said axial direction is located at said radially inner locations which define said inner air inlet space, said axial flow grid covering said inner air inlet space.

As a result, the air flow entering said centrifugal fan arrangement is more uniform.

In some embodiments, the ring duct, e.g. flow ring, may be located around said inner air inlet space between said scroll housing and said flow grid.

Preferably, first indentations are provided in an edge of said ring duct, e.g. flow ring, interfacing with said scroll housing and/or second indentations are provided in an edge of said scroll housing interfacing with said ring duct / flow ring.

Preferably, said scroll housing comprises a first ring-shaped formation and said flow grid comprises a second ring-shaped formation complementary to said first ring-shaped formation and interfacing therewith, said first and second ring -shaped formations together forming said ring duct when said scroll housing and said flow grid are assembled along their interfacing port ions.

Preferably, first indentations are provided in an edge of said first ring-shaped formation interfacing with said second ring-shaped formation and/or second indentations are provided in an edge of said second ring-shaped formation interfacing with said first ring-shaped formation.

In some embodiments, the ring duct, e.g. flow ring, may be located around said inner air inlet space in said scroll housing. The pressure sensor is located outside a duct portion of said centrifugal fan arrangement.

As a result, said pressure sensor, which may be a first pressure sensor, will measure air pressure outside said duct portion where there is no or very little air movement. Due to the absence of air flow, a pressure measurement by said first pressure sensor will typically be measurement of static pressure.

The circumferentially spaced holes and a pressure sensor are connected by pressure sensor air duct portions located outside said duct portion of said centrifugal fan arrangement.

As a result, said pressure sensor, which may be a second pressure sensor, i.e. a sensor being different from the first sensor, will measure air pressure inside said duct portion where there is air movement. Depending on the orientation of said holes with respect to the direction of airflow, a pressure measurement by said second pressure sensor can be a measurement of static pressure, dynamic pressure or a combination thereof.

Preferably, said pressure sensor air duct portions are made of an elastomeric material, e.g. silicone. The pressure sensor air duct portions may be hoses which can be easily bent and adapted to their installation environment.

Silicone is a preferred material for said pressure sensor air duct portions. Preferably, silicone tubes are used since dust particles and water droplets do not tend to stick to the silicone surface inside the silicone tubes. This helps prevent the formation of biofilms inside said pressure sensor air duct portions or tubes. Preferably, a minimum internal width of said pressure sensor air duct portions, e.g. the internal diameter of tubes, is greater than 8 mm. This helps prevent condensed water, e.g. water droplets, from blocking said pressure sensor air duct portions.

Preferably, said pressure sensor means comprises a first pressure sensor for measuring air pressure outside a duct portion of said centrifugal fan arrangement and a second pressure sensor for measuring air pressure inside said duct portion of said centrifugal fan arrangement.

This combination of first and second pressure sensors can be used to provide respective pressure measurements which can be used to determine instantaneous airflow velocity or instantaneous air flow within said centrifugal fan arrangement which can be integrated over a given period of time to obtain cumulated air flow during said time period.

Preferably, said first pressure sensor and said second pressure sensor are arranged as static air pressure sensors.

However, as mentioned before, said second pressure sensor for measuring inside air pressure may be fluidly connected to the inside of said duct portion in different ways, e.g. hole orientations with respect to airflow direction within said duct, in order to measure static pressure, dynamic pressure or any combination thereof within said duct portion.

Preferably, both said first pressure sensor and said second pressure sensor are located in a pressure sensor housing located outside said centrifugal fan arrangement.

This provides protection of the sensors and sensor electronics from water, dust, etc.

Preferably, said pressure sensor housing comprises a first connecting formation for connecting said pressure sensor air duct portions, located outside said duct portion, to said first pressure sensor located in said pressure sensor housing. This first connecting formation may be a nipple or pipe socket to be engaged by an end of said pressure sensor air ducts.

These pressure sensor air ducts provide further protection of the sensors and sensor electronics from water, dust, etc.

Preferably, said pressure sensor housing comprises a second connecting formation for connecting a further pressure sensor air duct portion, located outside said duct portion, to said second pressure sensor located in said pressure sensor housing. Again, this first connecting formation may be a nipple or pipe socket to be engaged by an end of said pressure sensor air ducts.

The pressure sensor air duct portions located outside said duct portion of said centrifugal fan arrangement comprise a junction, preferably a T-junction or a Y-junction, where a first pressure sensor air duct portion connected to a first hole of said circumferentially spaced holes, a second pressure sensor air duct portion connected to a second hole of said circumferentially spaced holes and a third pressure sensor air duct portion connected to said first pressure sensor are all fluidly connected to each other.

As a result, the centrifugal fan arrangement can be positioned such that the third pressure sensor air duct is oriented horizontally. This helps prevent condensation water droplets and dust particles from entering said third pressure sensor air duct. Advantageously, the centrifugal fan arrangement can be positioned such that said third pressure sensor air duct portion is oriented horizontally while an end portion of said first pressure sensor air duct portion within said junction and an end portion of said second pressure sensor air duct port ion within said junction are oriented vertically. This also helps prevent condensation water droplets and dust particles from entering said third pressure sensor air duct portion.

Preferably, said third pressure sensor air duct portion has a smaller cross section than said first and second pressure sensor air duct portions.

Again, this helps prevent condensation water droplets and dust particles from entering said third pressure sensor air duct portion.

If said first pressure sensor and said second pressure sensor are arranged as static air pressure sensors, the static air pressure measured by said second pressure sensor inside said duct portion where there is air movement will be smaller than static air pressure of stagnant air. Therefore, if condensation water droplets and dust particles have entered said third pressure sensor air duct portion, e.g. in a stagnant air environment during non-operation of the centrifugal fan arrangement, the lower static air pressure will tend to suck these condensation water droplets and dust particles out of said third pressure sensor air duct portion when the fan of the centrifugal fan arrangement is turned on again after having been turned off for a period of time (non-operation).

Preferably, said housing main portion comprises an outside formation extending away from the outside of said housing main portion.

This outside formation can be used for holding the centrifugal fan arrangement in a defined position within a HRV unit, e.g. by inserting said outside formation in a complementary hole formation in a wall portion or thermal/acoustic insulation portion of said HRV unit or by clamping said outside formation between two wall portions or thermal/acoustic insulation portions of said HRV unit.

Preferably, said outside formation is a plate-type formation.

Preferably, said plate-type formation extends adjacent to and beyond said second connecting formation for connecting a further pressure sensor air duct to said second pressure sensor located in said pressure sensor housing for measuring air pressure outside said centrifugal fan arrangement.

As a result, the plate-type formation helps reduce air flow around said second connecting formation by providing a windshield or umbrella function which is of particular interest if said second connecting formation is used in a " naked mode" without a further pressure sensor air duct connected to it. This prevents non-zero air speeds at said second connecting formation which is meant for static pressure measurements, thus preventing errors in determining air flow.

Preferably, said outside formation has through-holes for feeding through said pressure sensor air duct portions, preferably for feeding through said first and second pressure sensor air duct portions.

As a result, said pressure sensor air ducts, e.g. elastomer tubes, are fixed in place and less vulnerable to mechanical damage.

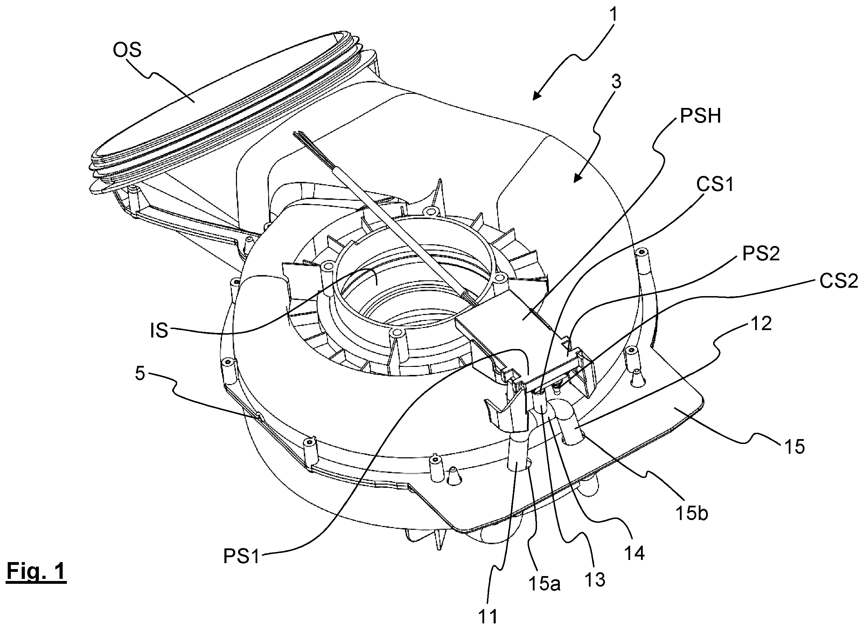

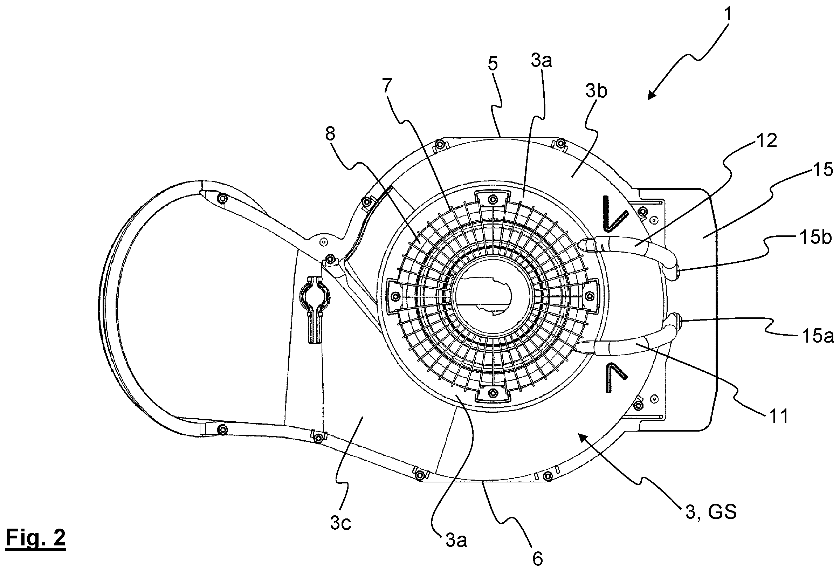

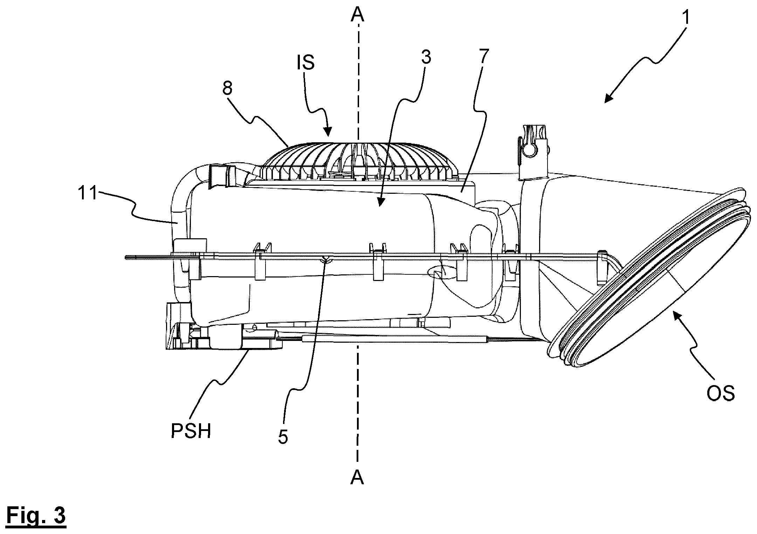

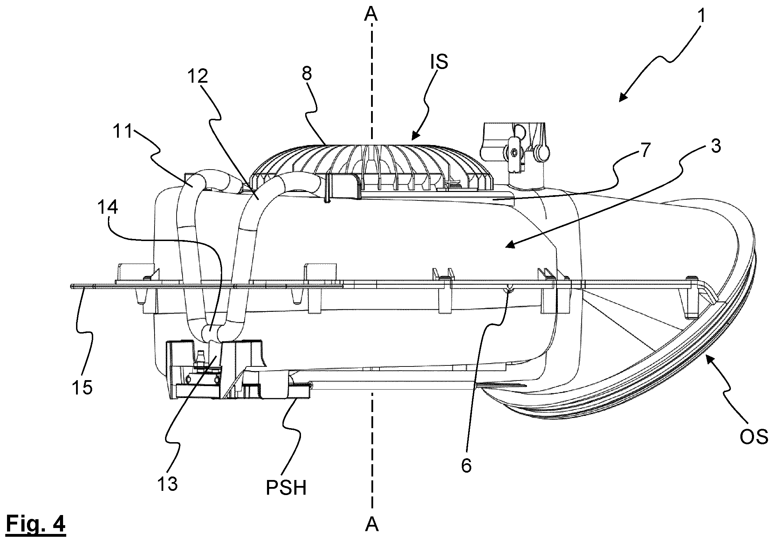

Fig. 1 to 4 show a centrifugal fan arrangement 1 according to the invention.

### List of reference signs

- 1: centrifugal fan arrangement
- 2: centrifugal fan
- 3: scroll housing
- 3a: scroll housing inlet portion
- 3b: scroll housing main portion
- 3c: scroll housing outlet portion
- A: axial direction (axis of fan rotation)
- GS: air guiding space
- IS: air inlet space
- OS: air outlet space
- D: maximum housing diameter (radial dimension)
- H: maximum housing width (axial dimension)
- 5: drainage hole
- 6: drainage hole
- 7: ring duct (flow ring)
- 8: flow grid
- PSH: pressure sensor housing
- PS1: first pressure sensor (air pressure measurement outside the centrifugal fan arrangement)
- PS2: second pressure sensor (air pressure measurement inside the centrifugal fan arrangement)
- CS1: first connecting formation
- CS2: second connecting formation
- 11: first pressure sensor air duct portion
- 12: second pressure sensor air duct portion
- 13: third pressure sensor air duct portion
- 14: junction (of pressure sensor air duct portions)
- 15: outside formation (plate)
- 15a: through-hole
- 15b: through-hole

## Claims

1. A centrifugal fan arrangement (1) comprising a centrifugal fan (2) rotatably mounted within a scroll housing (3), wherein said centrifugal fan comprises a plurality of circumferentially spaced fan blades fixed to a central fan axle extending along an axial direction (A) and/or to a circumferential fan ring extending in a plane orthogonal to an axial direction (A), wherein said scroll housing (3) comprises a housing main portion (3b) with a maximum housing diameter D and a maximum axial housing width H, a housing inlet portion (3a) and a housing outlet portion (3c), said housing main portion (3b) surrounding said centrifugal fan (2) at radially outer locations to define a circumferentially extending air guiding space (GS), said housing inlet portion (3a) being located at radially inner locations to define an inner air inlet space (1S), and said housing outlet portion (3c) being located at a radially outer location in order to define an air outlet space (OS),
wherein a ratio D/H between said maximum housing diameter D of said housing main portion and said maximum axial housing width H of said housing main portion (3b) is comprised between 20/10 and 35/10, and preferably between 25/10 and 32/10,
wherein the centrifugal fan arrangement (1) comprises pressure sensor means (PS1, PS2) for measuring air pressure within and/or outside said centrifugal fan arrangement (1),
wherein the pressure sensor means comprises a pressure sensor (PS1) located outside a duct portion of said centrifugal fan arrangement,
wherein the pressure sensor means further comprises a ring duct (7) with circumferentially spaced holes in fluid connection with the pressure sensor (PS1) and circumferentially extending along an inner wall of said duct portion for spatially averaged air pressure measurement,
wherein said circumferentially spaced holes and said pressure sensor (PS1) are connected by pressure sensor air duct portions (11, 12) located outside said duct portion of said centrifugal fan arrangement,
and wherein said pressure sensor air duct portions (11, 12) located outside said duct portion of said centrifugal fan arrangement (1) comprise a junction (14), preferably a T-junction or Y-junction, where a first pressure sensor air duct portion (11) connected to a first hole of said circumferentially spaced holes, a second pressure sensor air duct portion (12) connected to a second hole of said circumferentially spaced holes and a third pressure sensor air duct portion (13) connected to said pressure sensor (PS1) are all fluidly connected to each other.

2. A centrifugal fan arrangement as defined in claim 1, **characterized in that** said fan blades have a maximum axial blade width E and a maximum radial blade length F, wherein preferably a ratio E/H between said axial blade width E and said maximum axial housing width H is comprised between 2/10 and 8/10, and preferably between 2/10 and 6/10.

3. A centrifugal fan arrangement as defined in claim 1 or 2, **characterized in that** said fan blades are straight radial blades or curved blades.

4. A centrifugal fan arrangement as defined in any one of the previous claims, **characterized in that** said housing outlet portion (3c) comprises an outlet duct portion having a bend, wherein preferably the bend has a bend angle comprised between 0° and 60°, and preferably between 10° and 50°.

5. A centrifugal fan arrangement as defined in any one of the previous claims, **characterized in that** it comprises drainage holes (5, 6), wherein preferably the drainage holes (5, 6) are located in a wall portion of said scroll housing (3).

6. A centrifugal fan arrangement as defined in claim 5, **characterized in that** two drainage holes (5, 6) are located on a maximum diameter circumferential line of said scroll housing (3) at diametrically opposite locations.

7. A centrifugal fan arrangement as defined in any one of the previous claims, **characterized in that** a local inner cross sectional area of said scroll housing (3) increases from an inlet (3a) of said scroll housing (3) to an outlet (3c) of said scroll housing (3), wherein preferably a local inner axial width of said scroll housing (3) increases from an inlet (3a) of said scroll housing (3) to an outlet (3c) of said scroll housing (3).

8. A centrifugal fan arrangement as defined in claim 7, **characterized in that** a local inner radial width of said scroll housing (3) increases from an inlet (3a) of said scroll housing (3) to an outlet (3c) of said scroll housing (3), wherein preferably two drainage holes (5, 6) are located at a location of maximum diameter of said scroll housing (3), one of said holes (5) being located in a first wall portion and the other of said holes (6) being located in a second wall portion diametrically opposite to said first wall portion.

9. A centrifugal fan arrangement as defined in any one of the previous claims, **characterized in that** an axial flow grid (8) having walls extending in said axial direction (A) is located at said radially inner locations which define said inner air inlet space (IS), said axial flow grid (8) covering said inner air inlet space (IS).

10. A centrifugal fan arrangement as defined in in any one of the previous claims, wherein the pressure sensor air duct portions (11, 12) are made of an elastomeric material.

11. A centrifugal fan arrangement as defined in any one of the previous claims, **characterized in that** said pressure sensor means comprises a first pressure sensor (PS1) for measuring air pressure outside (a duct portion of) said centrifugal fan arrangement and a second pressure sensor (PS2) for measuring air pressure inside said centrifugal fan arrangement, wherein preferably the first pressure sensor (PS1) and said second pressure sensor (PS2) are arranged as static air pressure sensors.

12. A centrifugal fan arrangement as defined in claim 11, **characterized in that** both said first pressure sensor (PS1) and said second pressure sensor (PS2) are encapsulated in a pressure sensor housing (PSH) located outside said centrifugal fan arrangement.

13. A centrifugal fan arrangement as defined in any one of the previous claims, wherein the third pressure sensor air duct portion (13) has a smaller cross section than said first and second pressure sensor air duct portions (11, 12).

## Patentansprüche

1. Radialventilatoranordnung (1), umfassend einen in einem Spiralgehäuse (3) drehbar gelagerten Radialventilator (2), wobei der Radialventilator eine Vielzahl von in Umfangsrichtung beabstandeten Ventilatorflügeln umfasst, die an einer zentralen Ventilatorachse befestigt sind, die sich entlang einer axialen Richtung (A) erstreckt, und/oder an einem umlaufenden Ventilatorring, der sich in einer Ebene orthogonal zu einer axialen Richtung (A) erstreckt, wobei das Spiralgehäuse (3) einen Gehäusehauptteil (3b) mit einem maximalen Gehäusedurchmesser D und einer maximalen axialen Spannweite H umfasst, einen Gehäuseeinlassteil (3a) und einen Gehäuseauslassteil (3c), wobei der Gehäusehauptteil (3b) den Radialventilator (2) an radial äußeren Stellen umgibt, um einen in Umfangsrichtung verlaufenden Luftführungsraum (GS) zu definieren, wobei der Gehäuseeinlassteil (3a) an radial inneren Stellen angeordnet ist, um einen inneren Lufteinlassraum (1S) zu definieren, und der Gehäuseauslassteil (3c) an einer radial äußeren Stelle angeordnet ist, um einen Luftauslassraum (OS) zu definieren,
wobei ein Verhältnis D/H zwischen dem maximalen Gehäusedurchmesser D des Gehäusehauptteils und der maximalen axialen Spannweite H des Gehäusehauptteils (3b) zwischen 20/10 und 35/10, und vorzugsweise zwischen 25/10 und 32/10, liegt,
wobei die Radialventilatoranordnung (1) eine Drucksensoreinrichtung (PS1, PS2) zum Messen des Luftdrucks innerhalb und/oder außerhalb der Radialventilatoranordnung (1) umfasst, wobei die Drucksensoreinrichtung einen Drucksensor (PS1) umfassen, der außerhalb eines Kanalabschnitts der Radialventilatoranordnung angeordnet ist,
wobei die Drucksensoreinrichtung ferner einen Ringkanal (7) mit in Umfangsrichtung beabstandeten Löchern umfassen, der in Fluidverbindung mit dem Drucksensor (PS1) steht und in Umfangsrichtung entlang einer Innenwand des Kanalabschnitts verläuft zur räumlich gemittelten Luftdruckmessung,
wobei die in Umfangsrichtung beabstandeten Löcher und der Drucksensor (PS1) durch Drucksensor-Luftkanalabschnitte (11, 12) verbunden sind, die sich außerhalb des Kanalabschnitts der Radialventilatoranordnung befinden,
und wobei die außerhalb des Kanalabschnitts der Radialventilatoranordnung (1) angeordneten Drucksensor-Luftkanalabschnitte (11, 12) eine Verbindung (14), vorzugsweise eine T-Verbindung oder Y-Verbindung, umfassen, wobei ein erster Drucksensor-Luftkanalabschnitt (11), der mit einem ersten Loch der in Umfangsrichtung beabstandeten Löcher verbunden ist, ein zweiter Drucksensor-Luftkanalabschnitt (12), der mit einem zweiten Loch der in Umfangsrichtung beabstandeten Löcher verbunden ist, und ein dritter Drucksensor-Luftkanalabschnitt (13), der mit dem Drucksensor (PS1) verbunden ist, alle fluidisch miteinander verbunden sind.

2. Radialventilatoranordnung nach Anspruch 1, **dadurch gekennzeichnet, dass** die Ventilatorflügel eine maximale axiale Spannweite E und eine maximale radiale Schaufellänge F aufweisen, wobei vorzugsweise ein Verhältnis E/H zwischen der axialen Spannweite E der Flügel und der maximalen axialen Spannweite H des Gehäuses zwischen 2/10 und 8/10, und vorzugsweise zwischen 2/10 und 6/10 liegt.

3. Radialventilatoranordnung nach Anspruch 1 oder 2, **dadurch gekennzeichnet, dass** die Ventilatorflügel gerade Radialflügel oder gebogene Flügel sind.

4. Radialventilatoranordnung nach einem der vorhergehenden Ansprüche, **dadurch gekennzeichnet, dass** der Gehäuseauslassabschnitt (3c) einen Auslasskanalabschnitt mit einer Biegung umfasst, wobei die Biegung vorzugsweise einen Biegewinkel zwischen 0° und 60°, und vorzugsweise zwischen 10° und 50° aufweist.

5. Radialventilatoranordnung nach einem der vorhergehenden Ansprüche, **dadurch gekennzeichnet, dass** sie Entwässerungslöcher (5, 6) umfasst, wobei die Entwässerungslöcher (5, 6) vorzugsweise in einem Wandabschnitt des Spiralgehäuses (3) angeordnet sind.

6. Radialventilatoranordnung nach Anspruch 5, **dadurch gekennzeichnet, dass** zwei Entwässerungslöcher (5, 6) auf einer Umfangslinie mit maximalem Durchmesser des Spiralgehäuses (3) an diametral gegenüberliegenden Stellen angeordnet sind.

7. Radialventilatoranordnung nach einem der vorhergehenden Ansprüche, **dadurch gekennzeichnet, dass** eine lokale innere Querschnittsfläche des Spiralgehäuses (3) von einem Einlass (3a) des Spiralgehäuses (3) zu einem Auslass (3c) des Spiralgehäuses (3) zunimmt, wobei vorzugsweise eine lokale innere axiale Spannweite des Spiralgehäuses (3) von einem Einlass (3a) des Spiralgehäuses (3) zu einem Auslass (3c) des Spiralgehäuses (3) zunimmt.

8. Radialventilatoranordnung nach Anspruch 7, **dadurch gekennzeichnet, dass** eine lokale innere radiale Spannweite des Spiralgehäuses (3) von einem Einlass (3a) des Spiralgehäuses (3) zu einem Auslass (3c) des Spiralgehäuses (3) zunimmt, wobei vorzugsweise zwei Entwässerungslöcher (5, 6) an einer Stelle mit maximalem Durchmesser des Spiralgehäuses (3) angeordnet sind, wobei eines der Löcher (5) in einem ersten Wandabschnitt und das andere der Löcher (6) in einem zweiten Wandabschnitt angeordnet ist, der dem ersten Wandabschnitt diametral gegenüberliegt.

9. Radialventilatoranordnung nach einem der vorhergehenden Ansprüche, **dadurch gekennzeichnet, dass** ein Axialströmungsgitter (8) mit in der axialen Richtung (A) verlaufenden Wänden an den radial inneren Stellen angeordnet ist, die den inneren Lufteinlassraum (IS) definieren, wobei das Axialströmungsgitter (8) den inneren Lufteinlassraum (IS) abdeckt.

10. Radialventilatoranordnung nach einem der vorhergehenden Ansprüche, wobei die Drucksensor-Luftkanalabschnitte (11, 12) aus einem elastomeren Material hergestellt sind.

11. Radialventilatoranordnung nach einem der vorhergehenden Ansprüche, **dadurch gekennzeichnet, dass** die Drucksensoreinrichtung einen ersten Drucksensor (PS1) zum Messen des Luftdrucks außerhalb (eines Kanalabschnitts) der Radialventilatoranordnung und einen zweiten Drucksensor (PS2) zum Messen des Luftdrucks innerhalb der Radialventilatoranordnung umfasst, wobei vorzugsweise der erste Drucksensor (PS1) und der zweite Drucksensor (PS2) als statische Luftdrucksensoren angeordnet sind.

12. Radialventilatoranordnung nach Anspruch 11, **dadurch gekennzeichnet, dass** sowohl der erste Drucksensor (PS1) als auch der zweite Drucksensor (PS2) von einem Drucksensorgehäuse (PSH) umschlossen sind, das sich außerhalb der Radialventilatoranordnung befindet.

13. Radialventilatoranordnung nach einem der vorhergehenden Ansprüche, wobei der dritte Drucksensor-Luftkanalabschnitt (13) einen kleineren Querschnitt aufweist als der erste und der zweite Drucksensor-Luftkanalabschnitt (11, 12).

## Revendications

1. Dispositif de ventilateur centrifuge (1) comprenant un ventilateur centrifuge (2) monté de manière rotative à l'intérieur d'un boîtier spirale (3), dans lequel ledit ventilateur centrifuge comprend une pluralité des pales de ventilateur espacées circonférentiellement et fixées à un axe de ventilateur central s'étendant le long d'une direction axiale (A) et/ou à un anneau de ventilateur circonférentiel s'étendant dans un plan orthogonal à une direction axiale (A), dans lequel ledit boîtier spirale (3) comprend une partie principale de boîtier (3b) avec un diamètre de boîtier maximal D et une largeur de boîtier axiale maximale H, une partie principale de boîtier (3a) et une partie de sortie de boîtier (3c), ladite partie principale de boîtier (3b) entourant ledit ventilateur centrifuge (2) à des positions radialement extérieures afin de définir un espace de guidage d'air (GS) s'étendant sur la circonférence, ladite partie principale de boîtier (3a) étant située à des positions radialement intérieures afin de définir un espace d'entrée d'air intérieur (1S), et ladite partie de sortie de boîtier (3c) étant située à une position radialement extérieure afin de définir un espace de sortie d'air (OS),
dans lequel un rapport D/H entre ledit diamètre maximal de boîtier D de ladite partie principale de boîtier et ladite largeur axiale maximale de boîtier H de ladite partie principale de boîtier (3b) est compris entre 20/10 et 35/10, et de préférence entre 25/10 et 32/10,
dans lequel le dispositif de ventilateur centrifuge (1) comprend des moyens de détection de pression (PS1, PS2) pour mesurer la pression de l'air à l'intérieur et/ou à l'extérieur dudit dispositif de ventilateur centrifuge (1), dans lequel les moyens de détection de pression comprennent un capteur de pression (PS1) situé à l'extérieur d'une partie conduit dudit dispositif de ventilateur centrifuge,
dans lequel les moyens de détection de la pression comprennent en outre un conduit circulaire (7) avec des trous espacés sur la circonférence en liaison fluidique avec le capteur de pression (PS1) et s'étendant sur la circonférence le long d'une paroi intérieure de ladite partie de conduit pour la mesure de la pression d'air moyennée dans l'espace,
dans lequel lesdits trous espacés de manière circonférentielle et ledit capteur de pression (PS1) sont reliés par des parties de conduit d'air de capteur de pression (11, 12) situées à l'extérieur de ladite partie de conduit dudit dispositif de ventilateur centrifuge,
et dans lequel lesdites parties de conduit d'air de capteur de pression (11, 12) situées à l'extérieur de ladite partie de conduit dudit dispositif de ventilateur centrifuge (1) comprennent une jonction (14), de préférence une jonction en T ou en Y, où une première partie de conduit d'air de capteur de pression (11) reliée à un premier trou desdits trous espacés de manière circonférentielle, une deuxième partie de conduit d'air de capteur de pression (12) reliée à un deuxième trou desdits trous espacés sur la circonférence et une troisième partie de conduit d'air de capteur de pression (13) reliée audit capteur de pression (PS1) sont toutes reliées de manière fluide l'une à l'autre.

2. Dispositif de ventilateur centrifuge selon la revendication 1, **caractérisé en ce que** lesdites pales de ventilateur ont une largeur de pale axiale maximale E et une longueur de pale radiale maximale F, dans lequel, de préférence, un rapport E/H entre ladite largeur de pale axiale E et ladite largeur de boîtier axial maximale H est compris entre 2/10 et 8/10, et de préférence entre 2/10 et 6/10.

3. Dispositif de ventilateur centrifuge selon la revendication 1 ou 2, **caractérisé en ce que** lesdites pales de ventilateur sont des pales radiales droites ou des pales incurvées.

4. Dispositif de ventilateur centrifuge selon l'une des revendications précédentes, **caractérisé en ce que** ladite partie de sortie de boîtier (3c) comprend une partie de conduit de sortie présentant un coude, dans lequel de préférence le coude présente un angle de courbure compris entre 0° et 60°, et de préférence entre 10° et 50°.

5. Dispositif de ventilateur centrifuge selon l'une des revendications précédentes, **caractérisé en ce qu'**il comprend des trous de drainage (5, 6), dans lequel de préférence les trous de drainage (5, 6) sont positionnés dans une partie de paroi dudit boîtier en spirale (3).

6. Dispositif de ventilateur centrifuge selon la revendication 5, **caractérisé en ce que** deux trous de drainage (5, 6) sont situés sur une ligne circonférentielle de diamètre maximal dudit boîtier en spirale (3) à des positions diamétralement opposées.

7. Dispositif de ventilateur centrifuge selon l'une des revendications précédentes, **caractérisé en ce qu'**une section transversale intérieure locale dudit boîtier en spirale (3) augmente d'une entrée (3a) dudit boîtier en spirale (3) à une sortie (3c) dudit boîtier en spirale (3), dans lequel de préférence une largeur axiale intérieure locale dudit boîtier en spirale (3) augmente d'une entrée (3a) dudit boîtier en spirale (3) à une sortie (3c) dudit boîtier en spirale (3).

8. Dispositif de ventilateur centrifuge selon la revendication 7, **caractérisé en ce qu'**une largeur radiale intérieure locale dudit boîtier en spirale (3) augmente d'une entrée (3a) dudit boîtier en spirale (3) à une sortie (3c) dudit boîtier en spirale (3), dans lequel de préférence deux trous de drainage (5, 6) sont situés à un emplacement de diamètre maximal dudit boîtier en spirale (3), l'un desdits trous (5) étant situé dans une première partie de paroi et l'autre desdits trous (6) étant situé dans une deuxième partie de paroi diamétralement opposée à ladite première partie de paroi.

9. Dispositif de ventilateur centrifuge selon l'une des revendications précédentes, **caractérisé en ce qu'**une grille d'écoulement axial (8) dont les parois s'étendent dans ladite direction axiale (A) est située au niveau desdites positions radialement intérieures qui définissent ledit espace d'entrée d'air intérieur (IS), ladite grille d'écoulement axial (8) recouvrant ledit espace d'entrée d'air intérieur (IS).

10. Dispositif de ventilateur centrifuge selon l'une des revendications précédentes, dans lequel les parties de conduit d'air du capteur de pression (11, 12) sont constituées d'un matériau élastomère.

11. Dispositif de ventilateur centrifuge selon l'une des revendications précédentes, **caractérisé en ce que** lesdits moyens de détection de pression comprennent un premier capteur de pression (PS1) pour mesurer la pression de l'air à l'extérieur (une partie de conduit) dudit dispositif de ventilateur centrifuge et un second capteur de pression (PS2) pour mesurer la pression de l'air à l'intérieur dudit dispositif de ventilateur centrifuge, dans lequel, de préférence, le premier capteur de pression (PS1) et ledit second capteur de pression (PS2) sont agencés comme des capteurs de pression d'air statique.

12. Dispositif de ventilateur centrifuge selon la revendication 11, **caractérisé en ce que** ledit premier capteur de pression (PS1) et ledit second capteur de pression (PS2) sont tous deux enserrés dans un boîtier de capteur de pression (PSH) situé à l'extérieur dudit dispositif de ventilateur centrifuge.

13. Dispositif de ventilateur centrifuge selon l'une des revendications précédentes, dans lequel la troisième partie de conduit d'air de capteur de pression (13) présente une section transversale plus petite que lesdites première et deuxième parties de conduit d'air de capteur de pression (11, 12).
